# EUROPÄISCHE PATENTSCHRIFT

(11) **EP 1 522 688 B1**
(45) Veröffentlichungstag und Bekanntmachung des Hinweises auf die Patenterteilung: **23.02.2011**
(21) Anmeldenummer: 04022745.6
(22) Anmeldetag: 24.09.2004
(51) Int. Cl.: F01P 5/06, F01P 11/10, F01P 11/12, F01P 11/02, B60K 11/04

(54) **Selbstfahrende Strassenfräsmaschine mit Kühlsystem**
Self-propelled road milling machine with a cooling system
Fraiseuse de route automotrice avec système de refroidissement

(30) Priorität: 10.10.2003 DE 10347872
(43) Veröffentlichungstag der Anmeldung: 13.04.2005
(73) Patentinhaber: Wirtgen GmbH, 53578 Windhagen (DE)
(72) Erfinder: Gaertner, Olaf, 53545 Linz/Rhein (DE); Langen, Thorsten, 53225 Bonn (DE); Bungarten, Dieter, 53577 Neustadt/Wied (DE)
(74) Vertreter: Luderschmidt, Schüler & Partner

(56) Entgegenhaltungen:
- EP-A- 0 646 485
- WO-A-88/06230
- DE-A1- 19 937 604
- FR-A- 2 240 858
- US-A- 3 866 580
- US-A- 5 649 587

## Beschreibung

Die vorliegende Erfindung betrifft eine selbstfahrende Straßenfräsmaschine mit einem Kühlsystem, wobei das Kühlsystem mindestens ein Gebläse zum Ansaugen von Kühlluft, mindestens einen Kühler und mindestens einen Ansaugkanal umfasst, der eine dem Kühler zugewandte Auslassöffnung und eine Einlassöffnung aufweist.

Die bekannten selbstfahrenden Straßenfräsmaschinen weisen im allgemeinen einen Antriebsmotor zur Fo>rtbewegung der Straßenfräsmaschine und zum Bewegen der Werkzeuge auf.

Zum Kühlen des Antriebsmotors sowie der Hydraulikflüssigkeit weisen die bekannten Straßenfräsmaschinen ein Kühlsystem auf, das im allgemeinen ein Gebläse zum Ansaugen von Umgebungsluft, einen Kühler und einen Ansaugkanal umfasst. Der Ansaugkanal, der meist durch Teile des Chassis ausgebildet ist, weist eine Einlassöffnung auf, die nach hinten, also entgegengesetzt zur Fahrtrichtung der Straßenfräsmaschine, oder nach vorne, also in Fahrtrichtung der Fräsmaschine, gerichtet ist, so dass die Umgebungsluft von hinten bzw. von vorne angesaugt wird. Der Ansaugkanal erstreckt sich ausgehend von der Einlassöffnung entlang der Längsachse der Straßenfräsmaschine bis zu einer Auslassöffnung, die unmittelbar vor dem Kühler angeordnet ist. Um zu vermeiden, dass Fremdkörper, beispielsweise kleinere Teile von Fräsgut oder Bauschutt, bis zu dem Kühler gelangen, ist vor der Einlassöffnung des Ansaugkanals ein sogenannter Kühlergrill angeordnet, der in der Art eines Gitters aufgebaut ist.

Der Kühler selbst weist mehrere von der Umgebungsluft umströmbare Leitungen auf, die vor der Auslassöffnung angeordnet sind und von einer Kühlflüssigkeit für den Antriebsmotor durchströmt werden. Um die Umgebungsluft anzusaugen, ist in Strömungsrichtung vor oder hinter dem Kühler ein Gebläse vorgesehen. In diesem Zusammenhang seien auch die sogenannten Kombinationskühler erwähnt, bei denen im Kühler mehrere getrennte Kühlkreisläufe vorgesehen sind, beispielsweise ein Kühlkreislauf für die Kühlflüssigkeit des Antriebsmotors - wie oben beschrieben - , ein Kühlkreislauf für Hydraulikflüssigkeit und gegebenenfalls ein weiterer Kühlkreislauf, beispielsweise für Ladeluft, die denselben Aufbau haben.

Die bekannten Straßenfräsmaschinen mit nach vorne bzw. hinten weisenden Ansaugkanälen haben den Nachteil, dass trotz des Kühlergrills sehr viel Staub und Schmutz in den Ansaugkanal eintreten und letztlich bis zu dem Kühler und in das Gebläse gelangen kann. Darüber hinaus ist nachteilig, dass das beschriebene Kühlsystem zu einer starken Geräuschentwicklung führt.

Die DE 199 37 604 A1 beschreibt ein Arbeitsfahrzeug mit einer Kühlvorrichtung, die über seitliche Lufteinlässe in den Seitenabdeckungen verfügt. Eine Kühlvorrichtung für ein Arbeitsfahrzeug ist auch aus der EP-A-0 646 485 und der US-A-3 866 580 bekannt.

Als nachteilig erweist sich bei den bekannten Arbeitsfahrzeugen, die über Kühlvorrichtungen mit seitlichen Lufteinlässen verfügen, dass die Geräuschentwicklung der im Motorraum angeordneten Kühlvorrichtungen relativ groß ist.

Der vorliegenden Erfindung liegt somit die Aufgabe zu Grunde, eine selbstfahrende Straßenfräsmaschine zu schaffen, deren Kühlsystem und deren das Kühlsystem umgebenden Bauteile einer geringeren Verschmutzung ausgesetzt sind und deren Geräuschentwicklung verringert ist.

Die Lösung dieser Aufgabe erfolgt mit den im Patentanspruch 1 angegebenen Merkmalen. Vorteilhafte Ausführungsforrnen der Erfindung sind Gegenstand der Unteransprüche.

Das Kühlsystem der erfindungsgemäßen selbstfahrenden Straßenfräsmaschine weist mindestens ein Gebläse zum Ansaugen von Kühlluft auf, wobei die Kühlluft aus der Umgebungsluft gewonnen wird. Unter einer selbstfahrenden Straßenfräsmaschine ist in diesem Zusammenhang eine Maschine zu verstehen, die mit eigenem Antriebsmotor zur Fortbewegung ausgestattet ist. Das Gebläse kann jegliche Vorrichtung sein, die ein Ansaugen von Luft ermöglicht, wobei im allgemeinen rotierbare Ventilatoren zum Einsatz kommen. Das Kühlsystem umfasst ferner mindestens einen Kühler. Der Kühler kann beispielsweise den eingangs beschriebenen Aufbau nach dem Stand der Technik aufweisen. Ferner umfasst das Kühlsystem mindestens einen Ansaugkanal, der eine dem Kühler zugewandte Auslassöffnung und eine Einlassöffnung aufweist. Erfindungsgemäß weist die Einlassöffnung bezogen auf die Längsachse der Straßenfräsmaschine zu der Seite der Fräsmaschine, so dass die Kühlluft seitlich angesaugt werden kann. Unter der Längsachse ist diejenige Achse der Straßenfräsmaschine zu verstehen, die sich in Längsrichtung der Straßenfräsmaschine von deren Heckseite zu deren Frontseite erstreckt.

Durch das seitliche Ansaugen der Kühlluft wird eine wesentlich geringere Verschmutzung des Ansaugkanals sowie der sich an den Ansaugkanal anschließenden Bauteile erzielt, zumal beim Arbeitseinsatz ein Großteil des Staubes vor bzw. hinter der Straßenfräsmaschine aufgewirbelt wird. Darüber hinaus hat sich gezeigt, dass bei der seitlichen Anordnung der Einlassöffnung die Geräuschentwicklung durch das Kühlersystem verringert werden kann. Dies ist darauf zurückzuführen, dass der Ansaugkanal mit der seitlichen Luftzuführung eine größere Länge haben kann, als wenn die Luft direkt von vorne zuströmt.

Vielfach führen Straßenfräsmaschinen einen Flüssigkeitstank mit sich, der in der Regel mit Wasser gefüllt ist. Bei der erfindungsgemäßen Straßenfräsmaschine ist der Ansaugkanal innerhalb des Flüssigkeitstanks ausgebildet. Der flüssigkeitsgefüllte Tank wirkt schalldämmend oder schalldämpfend auf den Ansaugkanal, so dass die Geräuschentwicklung durch das Kühlsystem weiter reduziert wird.

Bei einer bevorzugten Ausführungsform der erfindungsgemäßen Straßenfräsmaschine weist der Ansaugkanal mindestens drei Kanalabschnitte auf. Ein erster Kanalabschnitt schließt sich an die Einlassöffnung an und ist derart angeordnet, das die Kühlluft im Wesentlichen parallel zur Längsachse der Straßenfräsmaschine strömt. Ein sich an den ersten Kanalabschnitt anschließender zweiter Kanalabschnitt ist derart ausgebildet, dass die Kühlluft im Wesentlichen schräg zur Längsachse strömt. Der dritte Kanalabschnitt schließt sich an den zweiten Kanalabschnitt an, wobei der dritte Kanalabschnitt derart ausgebildet ist, dass die Kühlluft im Wesentlichen parallel zur Längsachse bis zur Auslassöffnung strömt. Die Kanalabschnitte als solche sowie die Übergangsbereiche zwischen den Kanalabschnitten sind vorzugsweise derart ausgebildet, dass möglichst geringe Verwirbelungen auftreten. Diese besondere Ausbildung des Ansaugkanals, der mit den einzelnen Kanalabschnitten eine relativ große Länge hat, führt zu einer verringerten Geräuschentwicklung.

Da das Kühlsystem vielfach an der Frontseite der Straßenfräsmaschinen angebracht ist, sind die Kanalabschnitte in einer bevorzugten Ausführungsform der Erfindung derart angeordnet, dass die Kühlluft im ersten Kanalabschnitt im Wesentlichen entgegen der Fahrtrichtung, im zweiten Kanalabschnitt im Wesentlichen quer zur Fahrtrichtung und im dritten Kanalabschnitt im Wesentlichen entgegen der Fahrtrichtung zur Auslassöffnung strömt.

Um eine besonders effektive Versorgung des Kühlsystems mit Kühlluft zu erreichen, sind in einer besonders bevorzugten Ausführungsform der erfindungsgemäßen Straßenfräsmaschine zwei Ansaugkanäle vorgesehen, wobei die Einlassöffnung des ersten Ansaugkanals zu der einen Seite und die Einlassöffnung des zweiten Ansaugkanals zu der anderen Seite der Straßenfräsmaschine weist. Um ein gleichmäßiges Ansaugen der Luft durch beide Ansaugkanäle zu erzielen, kann das Gebläse zwei Ventilatoren umfassen, wobei auch ein großes Gebläse, das beide Ansaugkanäle versorgt, gleichermaßen ausreichend ist. Beide Ansaugkanäle können getrennt geführt sein oder in einen gemeinsamen Auslaßkanal münden.

In einer weiteren besonders bevorzugten Ausführungsform ist der Ansaugkanal einstückig mit dem Flüssigkeitstank ausgebildet. Flüssigkeitstank und Ansaugsystem bilden somit eine vorzugsweise modulartige Einheit, die ohne großen Aufwand an dem Chassis der Straßenfräsmaschine montiert werden kann.

Um eine besonders gute Witterungsbeständigkeit des Flüssigkeitstanks und ggf. des Ansaugkanals zu erzielen, besteht der Flüssigkeitstank vorzugsweise aus Kunststoff. Der Kunststoff weist darüber hinaus eine hohe Schlagfestigkeit auf, was angesichts des Arbeitsumfeldes von Straßenfräsmaschinen von großer Wichtigkeit ist, damit keine Beschädigungen auf Grund von hochgeschleudertem Fräsgut auftreten können.

Der Ansaugkanal ist in einer weiteren bevorzugten Ausführungsform zur Seite, bezogen auf die Längsachse der Straßenfräsmaschine, von einer abnehmbaren Platte begrenzt.

Vorteilhafterweise ist bei einer weiteren bevorzugten Ausführungsform die Einlassöffnung in der Platte vorgesehen. So kann die Einlassöffnung beispielsweise aus mehreren nebeneinander angeordneten Löchern innerhalb der Platte bestehen, so dass auf einen Kühlergrill oder dergleichen verzichtet werden kann.

Um die Geräuschentwicklung des Kühlersystems weiter zu reduzieren, weist die Platte in einer weiteren vorteilhaften Ausführungsform eine Schalldämmmatte auf. Diese kann beispielsweise an der dem Ansaugkanal zugewandten Innenseite der Platte angeordnet sein und sich über den Bereich der Platte erstrecken, der die Einlassöffnung umgibt.

In einer weiteren bevorzugten Ausführungsform sind der Kühler und das Gebläse an dem Flüssigkeitstank befestigt. Dies ermöglicht eine einfache, modulartige Verbindung des kompletten Kühlsystem inklusive des Flüssigkeitstanks mit den anderen Bauteilen der Straßenfräsmaschine.

Um sowohl die Hydraulikflüssigkeit als auch das Kühlmittel für den Antriebsmotor der Straßenfräsmaschine kühlen zu können, ist der Kühler in einer bevorzugten Ausführungsform als sogenannter Kombinationskühler ausgebildet, d.h. der Kühler weist beispielsweise einen Kühlkreislauf für das Kühlmittel des Antriebsmotor, einen Kühlkreislauf für Hydraulikflüssigkeit und gegebenenfalls einen weiteren Kühlkreislauf für Ladeluft auf.

Bei der Straßenfräsmaschine kann es sich um eine Hecklader-Straßenfräsmaschine handeln, bei der das Fräsgut über das Heck der Fräsmaschine abgeführt und evtl. einem Begleitfahrzeug zugeführt wird. Bei diesem Fahrzeugtyp kann der Flüssigkeitstank zusammen mit dem Kühlsystem besonders vorteilhaft im Bereich der Frontseite der Maschine angeordnet werden. Die Straßenfräsmaschine kann aber grundsätzlich auch ein Frontlader sein.

Vielfach ist der Flüssigkeitstank bei Straßenfräsmaschinen an der Frontseite des Fahrzeugs angeordnet, wobei sich die Vorderräder bzw. das Vorderrad unterhalb des Flüssigkeitstanks befinden. Daher ist es dem Bedienungspersonal im Fahrerstand der Straßenfräsmaschine nicht möglich, die Stellung des Vorderrades zu erkennen, was insbesondere bei der Anfahrt der Straßenfräsmaschine eine Gefahr für umstehendes Personal und auch die Maschine bedeuten kann. Bei einer bevorzugten Ausführungsform ist der Flüssigkeitstank oberhalb eines steuerbaren Rades oder der steuerbaren Radachse angeordnet, wobei sich ein Kanal durch den Flüssigkeitstank erstreckt, durch den sich ein Übertragungsmittel erstreckt, über das die Ausrichtung des Rades bzw. der Radachse zu einem Richtungsanzeigemittel an der Oberseite des Flüssigkeitstanks übertragen wird. Das Übertragungsmittel kann beispielsweise eine Übertragungswelle sein, wobei es sich bei dem Richtungsanzeigemittel beispielsweise um einen rotierbaren Zeiger handeln kann.

Im Folgenden wird die Erfindung an Hand von Ausführungsbeispielen unter Bezugnahme auf die beigefügten Figuren eingehender erläutert.

### Es zeigen:

- Fig. 1: eine schematische Darstellung einer Ausführungsform der erfindungsgemäßen Straßenfräsmaschine in Form einer Hecklader-Sträßenfräsmaschine in Seitenansicht,
- Fig. 2: einen Schnitt entlang der Linie A-A von Fig. 1,
- Fig. 3: eine Draufsicht in Richtung des Pfeiles B von Fig. 1,
- Fig. 4: eine Draufsicht auf einen Flüssigkeitstank gemäß einer weiteren Ausführungsform der vorliegenden Erfindung,
- Fig. 5: eine Seitenansicht des Flüssigkeitstanks von Fig. 4 in Richtung des Pfeiles C,
wobei die Platte abgenommen ist,
- Fig. 6: eine Seitenansicht der in Fig. 5 nicht dargestellten Platte und
- Fig. 7: einen Schnitt entlang der Linie D-D von Fig. 4.

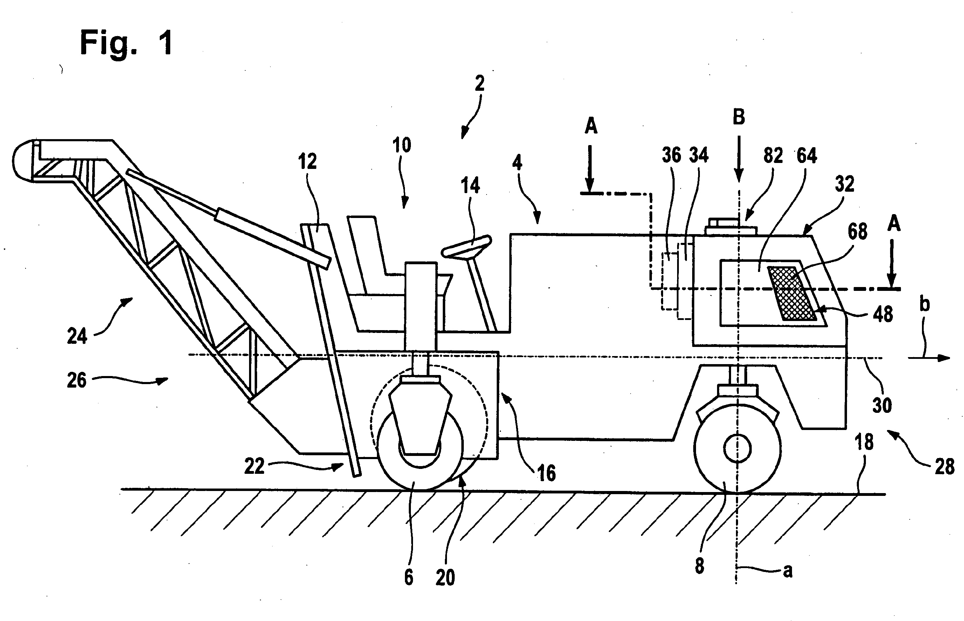

Fig. 1 zeigt eine Straßenfräsmaschine in Form einer Hecklader-Sträßenfräsmaschine 2. Die Straßenfräsmaschine 2 weist ein Chassis 4 auf, das bei der vorliegenden Ausführungsform auf drei Rädern 6, 6, 8 abgestützt ist, wobei die beiden Hinterräder 6, 6 (nur eines ist in Fig. 1 zu sehen) seitlich im Bereich des Hecks und das Vorderrad 8 mittig im Bereich der Frontseite der Straßenfräsmaschine 2 angeordnet ist. Die Hinterräder 6, 6 sind mittels einer Hydraulik höhenverstellbar, wobei die Lenkung der Straßenfräsmaschine 2 über das Vorderrad 8 erfolgt, das um eine senkrechte Achse a rotiert werden kann. Alternativ kann eine solche Straßenfräsmaschine 2 an Stelle der Räder 6, 6, 8 auch von Kettenlaufwerken getragen werden. Auch kann die Anzahl der vorgesehenen Räder oder Kettenlaufwerke variieren.

Innerhalb des Chassis 4 ist ferner mindestens ein Antriebsmotor für eine Fräswalze und die Räder 6, 6, 8 sowie eine Hydraulik vorgesehen. Ferner sind die aus dem Stand der Technik bekannten Zusatzaggregate vorgesehen, wobei auf deren Darstellung aus Übersichtlichkeitsgründen verzichtet wird.

Der Fahrerstand 10 ist oben im Heck der Straßenfräsmaschine 2 vorgesehen, wo sich unter anderem eine Sitzgelegenheit 12 für das Bedienungspersonal und eine Lenkeinrichtung 14 zur Lenkung des Vorderrades 8 befindet.

Unterhalb des Fahrerstandes 10 ist das Walzengehäuse 16 angeordnet. Das Walzengehäuse 16 ist ein nach unten, also in Richtung des Straßenbelages 18, geöffnetes Gehäuse, in dem sich eine Fräswalze 20 befindet, wobei sich die Längsachse der Fräswalze 20 quer zur Fahrtrichtung erstreckt, die in Fig. 1 an Hand des Pfeiles b dargestellt ist. Die Fräswalze 20 ragt aus dem Walzengehäuse 16 nach unten in Richtung des Straßenbelages 18 hervor.

An dem in Fahrtrichtung b hinteren Ende des Walzengehäuses 16 ist eine höhenverstellbare Abstreifeinrichtung 22 vorgesehen. In Fahrtrichtung b hinter der Abstreifeinrichtung 22 ist wiederum eine Transporteinrichtung 24 vorgesehen, über die das abgefräste Fräsgut einem begleitenden LKW mit entsprechender Ladefläche zugeführt werden kann (nicht dargestellt). Da das Fräsgut über das Heck der Straßenfräsmaschine 2 dem LKW zugeführt, handelt es sich - wie eingangs erwähnt - um eine sogenannte Hecklader-Straßenfräsmaschine.

Die Straßenfräsmaschine 2 weist ein Heck 26 und eine Frontseite 28 auf, wobei die Frontseite 28 in Fahrtrichtung b nach vorne und das Heck 26 entgegen der Fahrtrichtung nach hinten weist. Wenn im Folgenden von der Längsachse 30 die Rede ist, so handelt es sich dabei um diejenige Achse der Straßenfräsmaschine 2, die sich in Längsrichtung der Straßenfräsmaschine 2 vom Heck 26 zur Frontseite 28 erstreckt.

An der Frontseite 28 oberhalb des Vorderrades 8 ist ein Flüssigkeitstank 32 angeordnet, der gewöhnlich mit Wasser gefüllt ist. In Fahrtrichtung hinter dem Flüssigkeitstank 32 ist ein Kühler 34 angeordnet, der an dem Flüssigkeitstank 32 befestigt ist. An dem Kühler 34 ist wiederum ein Gebläse 36 befestigt, das dem Ansaugen der Kühlluft dient.

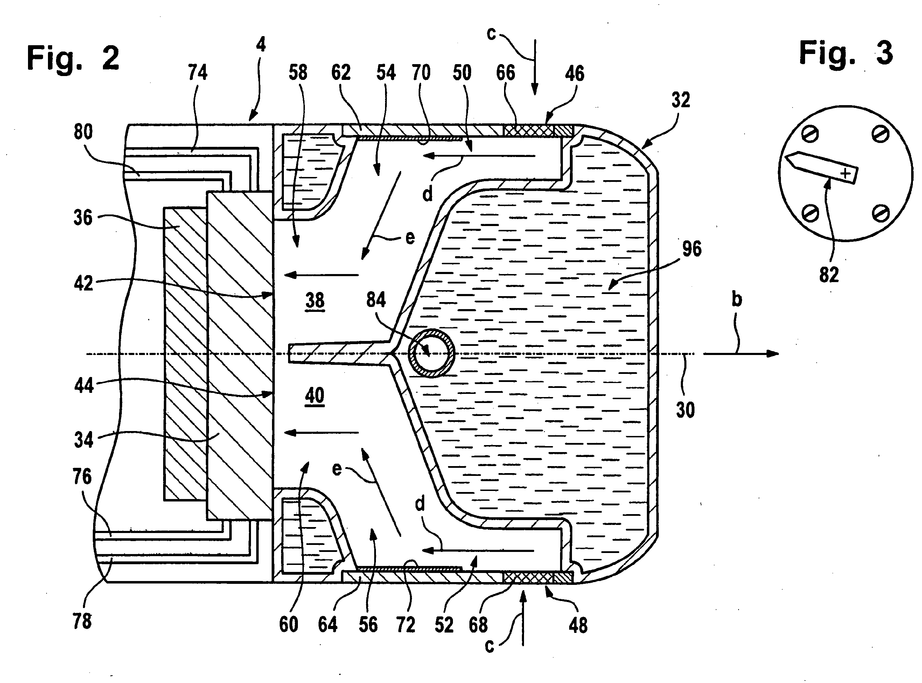

Unter Bezugnahme auf Fig. 2 wird im Folgenden das Kühlsystem der erfindungsgemäßen Straßenfräsmaschine 2 beschrieben. Das Kühlsystem umfasst neben dem zuvor beschriebenen Kühler 34 und Gebläse 36 noch zwei Ansaugkanäle 38 und 40. Die Ansaugkanäle 38, 40 weisen jeweils eine Auslassöffnung 42 bzw. 44, die dem Kühler 34 zugewandt ist, und eine Einlassöffnung 46, 48 auf. Die Einlassöffnung 46 des Ansaugkanals 38 weist bezogen auf die Längsachse 30 zu der einen Seite der Straßenfräsmaschine 2 (in Fahrtrichtung b nach links), während die Einlassöffnung 48 des Ansaugkanales 40 bezogen auf die Längsachse 30 zu der anderen Seite der Straßenfräsmaschine 2 weist (in Fahrtrichtung b nach rechts). Bei Betrieb des Gebläses 36 ist es somit beiden Ansaugkanälen 38, 40 möglich, die Kühlluft seitlich anzusaugen, wie dies an Hand der Pfeile c, c dargestellt ist.

Die Ansaugkanäle 38 bzw. 40 weisen jeweils einen ersten Kanalabschnitt 50 bzw. 52 auf, der in Strömungsrichtung hinter den Einlassöffnungen 46 bzw. 48 angeordnet ist. Der erste Kanalabschnitt 50 bzw. 52 ist dabei derart ausgebildet, dass die angesaugte Kühlluft im Wesentlichen parallel zur Längsachse 30 entgegen der Fahrtrichtung b strömt, wie dies an Hand der Pfeile d, d dargestellt ist.

An den ersten Kanalabschnitt 50 bzw. 52 schließt sich jeweils ein zweiter Kanalabschnitt 54 bzw. 56 an, der nach innen weist, so dass die Kühlluft im Wesentlichen quer zur Längsachse 30 strömt, wie dies an Hand der Pfeile e, e dargestellt ist. Bei der dargestellten Ausführungsform werden die beiden Kühlluftströme durch den zweiten Kanalabschnitt 54 bzw. 56 in Richtung der Fahrzeugmitte geführt, so dass sich die beiden Ströme einander annähern, bevor sie wie im Folgenden beschrieben, dem Kühler 34 zugeführt werden.

Abschließend weisen die Ansaugkanäle 38 bzw. 40 jeweils einen dritten Kanalabschnitt 58 bzw. 60 auf, durch den die Kühlluft wieder im Wesentlichen parallel zur Längsachse 30 und entgegen der Fahrtrichtung b zu der jeweiligen Auslassöffnung 42 bzw. 44 strömt, wo die Kühlluft zu dem darauffolgenden Kühler 34 gelangt. Es ist im Gegensatz zu der dargestellten Ausführungsform auch möglich, die beiden dritten Kanalabschnitte 58 bzw. 60 zu einem gemeinsamen Kanalabschnitt zusammen zu fassen.

Wie aus Fig. 2 ersichtlich sind die Ansaugkanäle 38 bzw. 40 innerhalb des Flüssigkeitstanks 32 angeordnet, so dass diese zum Großteil von der innerhalb des Flüssigkeitstanks 32 enthaltenen Flüssigkeit 96 umgeben sind. Ferner sind die Ansaugkanäle 38 bzw. 40 einstückig mit dem aus Kunststoff bestehenden Flüssigkeitstank 32 ausgebildet. Die Ansaugkanäle sind in dem Flüssigkeitstank derart ausgebildet, dass die Luft weitgehend verwirbelungsfrei strömt. Dies wird durch gebogene Begrenzungswände weitgehend ohne Ecken und Kanten erreicht.

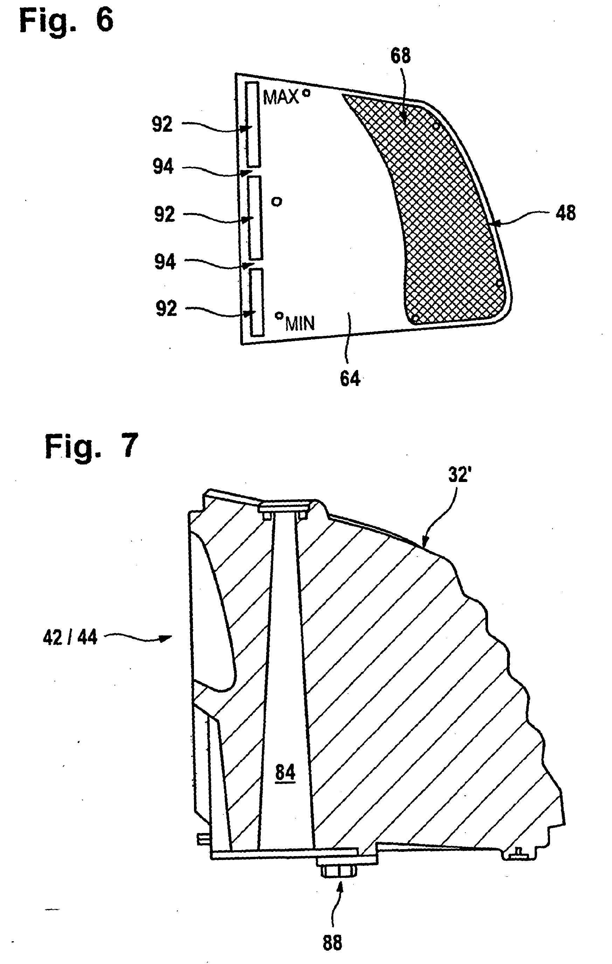

Die ersten Kanalabschnitte 50 bzw. 52 der Ansaugkanäle 38 bzw. 40 sind seitlich durch eine abnehmbare Platte 62 bzw. 64 begrenzt. An dem in Fahrtrichtung b vorderen Ende der Platte 62 bzw. 64 ist jeweils eine Öffnung vorgesehen, die der zuvor beschriebenen Einlassöffnung 46 bzw. 48 entspricht. Innerhalb der Einlassöffnungen 46 bzw. 48 ist eine gitterartige Struktur 66 bzw. 68 vorgesehen (siehe auch Fig. 1 und Fig. 6), die ein Eindringen größerer Festkörper verhindern soll.

Die Platten 62 bzw. 64 weisen jeweils eine dem Ansaugkanal 38 bzw. 40 zugewandte Schalldämmmatte 70 bzw. 72 auf, die durch das Kühlsystem entwickelte Geräusche eindämmen soll. Die Schalldämmmatten 70 bzw. 72 sind dabei derart dimensioniert, dass diese in der Seitenansicht den zweiten Kanalabschnitt 54 bzw. 56 verdecken.

Der Kühler 34 ist als sogenannter Kombinationskühler ausgebildet, d.h. dieser umfasst einen ersten Kühlkreislauf für das Kühlmittel des Antriebsmotors und einen zweiten Kühlkreislauf für die Hydraulikflüssigkeit der Hydraulik. So wird das Kühlmittel für den Antriebsmotor über eine Leitung 74 dem Kühler zugeführt, um nach dem Abkühlvorgang über eine weitere Leitung 76 zu dem Antriebsmotor zurückgeführt zu werden. Weiterhin wird die Hydraulikflüssigkeit der Hydraulik über eine Leitung 78 dem Kühler 34 zugeführt, um nach dem Abkühlvorgang über eine weitere Leitung 80 zu der Hydraulik zurückgeführt zu werden. Der Kühler 34 selbst weist den aus dem Stand der Technik bekannten Aufbau auf.

Wie bereits vorstehend erwähnt ist der Flüssigkeitstank 32 oberhalb des Vorderrades 8 angeordnet. Ferner ist das Vorderrad 8 bezüglich des Chassis 4 mittig angeordnet, so dass das Bedienungspersonal die Ausrichtung des Vorderrades 8 nicht erkennen kann, was insbesondere beim Anfahrvorgang problematisch ist. Um diesen Nachteil zu überwinden, weist der Flüssigkeitstank 32 ein Richtungsanzeigemittel 82 in Form eines Zeigers auf (siehe auch Fig. 3), der rotierbar ist und über ein nicht näher dargestelltes Übertragungsmittel, wie beispielsweise eine Welle, mit dem Vorderrad 8 derart verbunden ist, dass er die Ausrichtung des Vorderrades 8 anzeigt. Um den Übertragungsweg möglichst gering zu halten, ist ein weiterer Kanal 84 innerhalb des Flüssigkeitstanks 32 vorgesehen, der einstückig mit diesem ausgebildet ist und durch den sich das Übertragungsmittel ausgehend von dem Vorderrad 8 bzw. dessen Aufhängung bis zu dem Richtungsanzeigemittel 82 nach oben erstreckt, um die Ausrichtung des Vorderrades auf das zeigerförmige Richtungsanzeigemittel 82 zu übertragen.

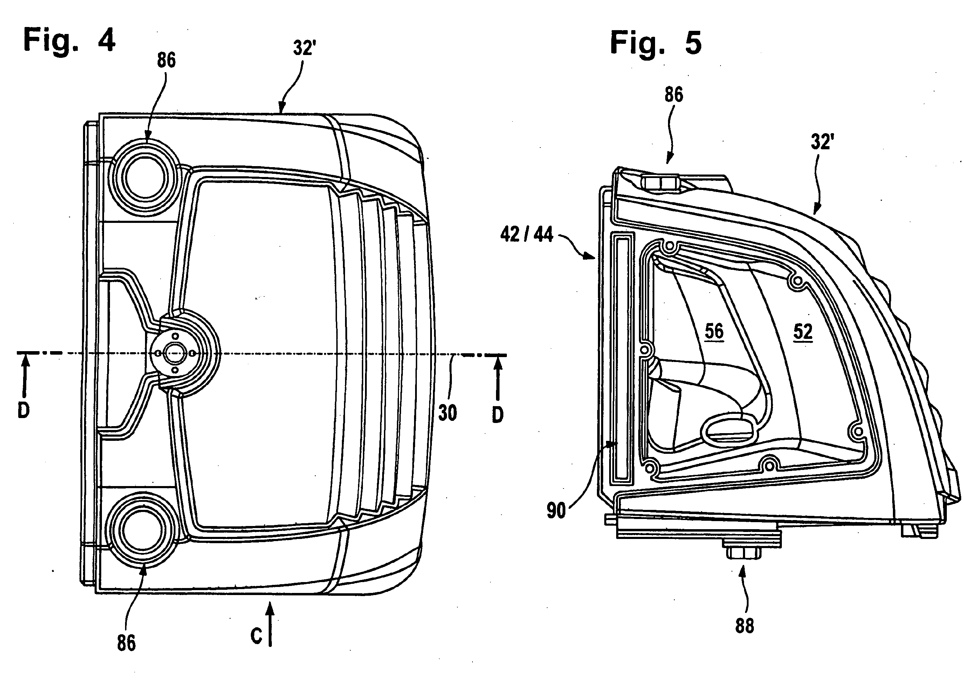

In den Fig. 4 bis 7 ist ein weiterer Flüssigkeitstank 84 gemäß einer Ausführungsform der erfindungsgemäßen Straßenfräsmaschine dargestellt, der im Wesentlichen dem eingangs beschriebenen Flüssigkeitstank 32 entspricht, so dass im Folgenden lediglich auf Unterschiede eingegangen werden soll und ähnliche bzw. gleiche Teile mit den gleichen Bezugszeichen versehen sind.

Der Flüssigkeitstank 32' weist an seiner Oberseite zwei seitliche Öffnungen auf, die jeweils mittels eines Deckels 86, 86 verschlossen sind. Über diese Öffnungen 86, 86 kann der Tank mit Flüssigkeit befüllt werden, wobei die jeweils seitliche Anordnung sowohl das Einfüllen von der rechten als auch von der linken Seite der Straßenfräsmaschine 2 erleichtert. Darüber hinaus weist der Flüssigkeitstank 32' eine im tiefsten Punkt des Bodens angeordnete Auslauföffnung auf, die mittels eines weiteren Deckels 88 verschlossen ist.

Der Flüssigkeitstank 32' weist ferner auf einer oder auf beiden Seiten eine durchsichtige Füllstandsanzeige 90 in Form eines Rohrs oder Schlauchs auf, um den Füllstand ablesen zu können. Die Platte 64 liegt im montierten Zustand über der Füllstandsanzeige 90, wobei längliche Aussparungen 92 vorgesehen sind, so dass die Flüssigkeitssäule ablesbar ist. Die Stege 94 zwischen den hintereinanderliegenden Aussparungen 92 dienen hierbei als Maßeinteilung.

## Patentansprüche

1. Selbstfahrende Straßenfräsmaschine mit einem Kühlsystem aufweisend mindestens ein Gebläse (36) zum Ansaugen von Kühlluft, mindestens einen Kühler (34) und mindestens einen stromauf des Gebläses (36) angeordneten Ansaugkanal (38; 40), wobei der Ansaugkanal (38; 40) eine dem Kühler (34) zugewandte Auslassöffnung (42; 44) und eine Einlassöffnung (46; 48) aufweist,
wobei die Einlassöffnung (46; 48) bezogen auf die Längsachse (30) der Straßenfräsmaschine zu der Seite der Straßenfräsmaschine weist, so dass die Kühlluft seitlich ansaugbar ist, **dadurch gekennzeichnet, dass** der Ansaugkanal (38;40) innerhalb eines Flüssigkeitstanks (32; 32') ausgebildet ist.

2. Straßenfräsmaschine nach Anspruch 1, **dadurch gekennzeichnet, dass** der Ansaugkanal (38; 40) einen sich an die Einlassöffnung (46; 48) anschließenden ersten Kanalabschnitt (50; 52), durch den die Kühlluft im Wesentlichen parallel zur Längsachse (30) strömt, einen sich an den ersten Kanalabschnitt (50; 52) anschließenden zweiten Kanalabschnitt (54; 56), durch den die Kühlluft im Wesentlichen schräg zur Längsachse (30) strömt, und einen sich an den zweiten Kanalabschnitt (54; 56) anschließenden dritten Kanalabschnitt (58; 60) aufweist, durch den die Kühlluft im Wesentlichen parallel zur Längsachse (30) bis zur Auslassöffnung (42; 44) strömt.

3. Straßenfräsmaschine nach Anspruch 2,**dadurch gekennzeichnet, dass** die Kanalabschnitte (50,52, 54, 56; 58, 60) derart angeordnet sind, dass die Kühlluft im ersten Kanalabschnitt (50; 52) im Wesentlichen entgegen der Fahrtrichtung (b), im zweiten Kanalabschnitt (54; 56) im Wesentlichen schräg zur Fahrtrichtung (b) und im dritten Kanalabschnitt (58; 60) im Wesentlichen entgegen der Fahrtrichtung (b) strömt.

4. Straßenfräsmaschine einem der Ansprüche 1 bis 3, **dadurch gekennzeichnet, dass** zwei Ansaugkanäle (38, 40) vorgesehen sind, wobei die EinIassöffnung (46) des ersten Ansaugkanals (38) zu der einen Seite und die Einlassöffnung (48) des zweiten Ansaugkanals (40) zu der anderen Seite der Strabenfräsmaschine weist.

5. Straßenfräsmaschine nach Anspruch 4, **dadurch gekennzeichnet, dass** der Ansaugkanal (38; 40) einstückig mit dem Flüssigkeitstank (32; 32') ausgebildet ist.

6. Straßenfräsmaschine nach Anspruch 4 oder 5, **dadurch gekennzeichnet, dass** der Flüssigkeitstank (32; 32') aus Kunststoff besteht,

7. Straßenfräsmaschine nach einem der vorangehenden Ansprüche, **dadurch gekennzeichnet, dass** der Ansaugkanal (38; 40) zur Seite von einer abnehmbaren Platte (62; 64) begrenzt ist.

8. Straßenfräsmaschine nach Anspruch 7, **dadurch gekennzeichnet, dass** der erste Kanalabschnitt (50; 52) von der abnehmbaren Platte (62; 64) begrenzt ist.

9. Straßenfräsmaschine nach Anspruch 7 oder 8, **dadurch gekennzeichnet, dass** die Einlassöffnung (46; 48) in der Platte (62; 64) ausgebildet ist.

10. Straßenfräsmaschine nach einem der Ansprüche 7 bis 9, **dadurch gekennzeichnet, dass** die Platte (62; 64) ferner eine Schalldämmmatte (70; 72) aufweist.

11. Straßenfräsmasehine nach einem der vorangehenden Ansprüche, **dadurch gekennzeichnet, dass** der Kühler (34) und das Gebläse (36) an dem Flüssigkeitstank (32; 84) befestigt sind.

12. Straßenfräsmaschine nach einem der vorangehenden Ansprüche, **dadurch gekennzeichnet, dass** der Kühler (34) einen Kühlkreislauf (74, 76) für das Kühlmittel einer Antriebseinrichtung und einen Kühlkreislauf (78, 80) für Hydraulikflüssigkeit einer Hydraulik umfasst.

13. Straßenfräsmaschine nach einem der vorangehenden Ansprüche, **dadurch gekennzeichnet, dass** die Straßenfräsmaschine eine Hecklader-Straßenfräsmaschine ist.

14. Straßenfräsmaschine nach einem der vorangehenden Ansprüche, **dadurch gekennzeichnet, dass** der Flüssigkeitstank (32; 32') oberhalb eines steuerbaren Rades (8) oder einer steuerbaren Radachse angeordnet ist, wobei sich ein Kanal (84) durch den Flüssigkeitstank (32; 32') erstreckt, durch den sich ein Übertragungsmittel erstreckt, über das die Ausrichtung des Rades (8) bzw. der Radachse zu einem Richtungsanzeigemittel (82) an der Oberseite des Flüssiglceitstanks (32; 32') übertragbar ist.

## Claims

1. Self-propelled road-milling machine having a cooling system having at least one air-moving means (36) for drawing in cooling air, at least one radiator (34) and at least one induction tract (38, 40) which is arranged upstream of the air-moving means (36), the induction tract (38, 40) having an outlet opening (42, 44) adjacent the radiator (34) and an inlet opening (46, 48), the inlet opening (46, 48) facing towards the side of the road-milling machine relative to the longitudinal axis (30) of the road-milling machine, thus causing the cooling air to be drawn in sideways, **characterised in that** the induction tract (38, 40) is formed inside a tank (32, 32') for liquid.

2. Road-milling machine according to claim 1, **characterised in that** the induction tract (38, 40) has a first portion (50, 52) which follows on from the inlet opening (46, 48) and through which the cooling air flows substantially parallel to the longitudinal axis (30) , a second portion (54, 56) which follows on from the first portion (50, 52) of the tract and through which the cooling air flows substantially obliquely to the longitudinal axis (30), and a third portion (58, 60) which follows on from the second portion (54, 56) of the tract and through which the cooling air flows to the outlet opening (42, 44) substantially parallel to the longitudinal axis (30).

3. Road-milling machine according to claim 2, **characterised in that** the portions (50, 52; 54, 56; 58, 60) of the tract are so arranged that the cooling air flows substantially in the opposite direction to the direction of travel (b) in the first portion (50, 52) of the tract, substantially obliquely to the direction of travel (b) in the section portion (54, 56) of the tract and substantially in the opposite direction to the direction of travel (b) in the third portion (58, 60) of the tract.

4. Road-milling machine according to one of claims 1 to 3, **characterised in that** two induction tracts (38, 40) are provided, with the inlet opening (46) of the first induction tract (38) facing towards one side of the road-milling machine and the inlet opening (48) of the second induction tract (40) facing towards the other side thereof.

5. Road-milling machine according to claim 4, **characterised in that** the induction tract (38, 40) is formed in one piece with the tank (32, 32') for liquid.

6. Road-milling machine according to claim 4 or 5, **characterised in that** the tank (32, 32') for liquid is composed of plastics material.

7. Road-milling machine according to one of the preceding claims, **characterised in that** the lateral boundary of the induction tract (38, 40) is formed by a removable plate (62, 64).

8. Road-milling machine according to claim 7, **characterised in that** a boundary of the first portion (50, 52) of the tract is formed by the removable plate (62, 64).

9. Road-milling machine according to claim 7 or 8, **characterised in that** the inlet opening (46, 48) is formed in the plate (62, 64).

10. Road-milling machine according to one of claims 7 to 9, **characterised in that** the plate (62, 64) also has a soundproofing sheet (70, 72).

11. Road-milling machine according to one of the preceding claims, **characterised in that** the radiator (34) and the air-moving means (36) are fastened to the tank (32, 84) for liquid.

12. Road-milling machine according to one of the preceding claims, **characterised in that** the radiator (34) comprises a cooling circuit (74, 76) for the coolant of a drive means and a cooling circuit (78, 80) for the hydraulic fluid of a hydraulic system.

13. Road-milling machine according to one of the preceding claims, **characterised in that** the road-milling machine is a rear-discharge road-milling machine.

14. Road-milling machine according to one of the preceding claims, **characterised in that** the tank (32, 32') for liquid is arranged above a steerable wheel (8) or a steerable axle, there being a passage (84) which extends through the tank (32, 32') for liquid and through which extends a transmission means by which the direction of the wheel (8) or axle can be transmitted to a direction-indicating means (82) on the top of the tank (32, 32') for liquid.

## Revendications

1. Fraiseuse de route automotrice avec un système de refroidissement comprenant au moins une soufflante (36) pour aspirer de l'air de refroidissement, au moins un radiateur (34) et au moins un canal d'aspiration (38 ; 40) agencé en amont de la soufflante (36), dans laquelle le canal d'aspiration (38 ; 40) comporte une ouverture de sortie (42 ; 44) tournée vers le radiateur (34) et une ouverture d'entrée (46 ; 48),
dans laquelle, par référence à l'axe longitudinal (30) de la fraiseuse de route, l'ouverture d'entrée (46 ; 48) est tournée vers le côté de la fraiseuse de sorte que l'air de refroidissement peut être aspiré latéralement,
**caractérisée en ce que** le canal d'aspiration (38 ; 40) est réalisé à l'intérieur d'un réservoir à liquide (32 ; 32').

2. Fraiseuse de route selon la revendication 1, **caractérisée en ce que** le canal d'aspiration (38 ; 40) comprend un premier tronçon de canal (50 ; 52), qui se raccorde à l'ouverture d'entrée (46, 48) et à travers lequel l'air de refroidissement s'écoule sensiblement parallèlement à l'axe longitudinal (30), un second tronçon de canal (54 ; 56), qui se raccorde au premier tronçon de canal (50 ; 52) et à travers lequel l'air de refroidissement s'écoule sensiblement en oblique par rapport à l'axe longitudinal (30), et un troisième tronçon de canal (58 ; 60) qui se raccorde au second tronçon de canal (54 ; 56) et à travers lequel l'air de refroidissement s'écoule sensiblement parallèlement à l'axe longitudinal (30) jusqu'à l'ouverture de sortie (42 ; 44).

3. Fraiseuse de route selon la revendication 2, **caractérisée en ce que** les tronçons de canal (50, 52 ; 54, 56 ; 58, 60) sont agencés de telle façon que l'air de refroidissement s'écoule dans le premier tronçon de canal (50 ; 52) sensiblement en sens contraire à la direction de circulation (b), dans le second tronçon de canal (54 ; 56) sensiblement en oblique par rapport à la direction de circulation (b), et dans le troisième tronçon de canal (58 ; 60) sensiblement en sens contraire à la direction de circulation (b).

4. Fraiseuse de route selon l'une des revendications 1 à 3, **caractérisée en ce qu'**il est prévu deux canaux d'aspiration (38, 40), tels que l'ouverture d'entrée (46) du premier canal d'aspiration (38) est tournée vers un côté de la fraiseuse de route, et l'ouverture d'entrée (48) du second canal d'aspiration (40) est tournée vers l'autre côté.

5. Fraiseuse de route selon la revendication 4, **caractérisée en ce que** le canal d'aspiration (38 ; 40) est réalisé d'un seul tenant avec le réservoir à liquide (32 ; 32').

6. Fraiseuse de route selon la revendication 4 ou 5, **caractérisée en ce que** le réservoir à liquide (32 ; 32') est en matière plastique.

7. Fraiseuse de route selon l'une des revendications précédentes, **caractérisée en ce que** le canal d'aspiration (38 ; 40) est délimité latéralement par une plaque amovible (62 ; 64).

8. Fraiseuse de route selon la revendication 7, **caractérisée en ce que** le premier tronçon de canal (50 ; 52) est délimité par la plaque amovible (62 ; 64).

9. Fraiseuse de route selon la revendication 7 ou 8, **caractérisée en ce que** l'ouverture d'entrée (46 ; 48) est réalisée dans la plaque (62 ; 64).

10. Fraiseuse de route selon l'une des revendications 7 à 9, **caractérisée en ce que** la plaque (62 ; 64) comprend en outre un tapis d'isolation phonique (70 ; 72).

11. Fraiseuse de route selon l'une des revendications précédentes, **caractérisée en ce que** le radiateur (34) et la soufflante (36) sont fixés sur le réservoir à liquide (32 ; 84).

12. Fraiseuse de route selon l'une des revendications précédentes, **caractérisée en ce que** le radiateur (34) comprend un circuit de refroidissement (74, 76) pour l'agent de refroidissement d'un système d'entraînement, et un circuit de refroidissement (78, 80) pour le liquide hydraulique d'un système hydraulique.

13. Fraiseuse de route selon l'une des revendications précédentes, **caractérisée en ce que** la fraiseuse de route est une fraiseuse de route à chargeur arrière.

14. Fraiseuse de route selon l'une des revendications précédentes, **caractérisée en ce que** le réservoir à liquide (32 ; 32') est agencé au-dessous d'une roue directrice (8) ou d'un essieu de roues directeur, et dans laquelle un canal (84) s'étend à travers le réservoir à liquide (32 ; 32') à travers lequel s'étend un moyen de transmission au moyen duquel l'orientation de la roue (8) ou de l'essieu de roues peut être transmise à un dispositif indicateur de direction (92) à la face supérieure du réservoir à liquide (32 ; 32').
